# EUROPEAN PATENT APPLICATION

(11) **EP 4 366 091 A1**
(43) Date of publication of application: **08.05.2024**
(21) Application number: 23207755.2
(22) Date of filing: 03.11.2023
(51) Int. Cl.: H01R 4/62, H01R 4/34, H01R 4/04, H01R 13/03, C23C 4/06, C23C 4/134, C23C 24/04

(54) **CONTACT ELEMENT WITH A SPRAY COATING AS WELL AS CONNECTION ASSEMBLY, USE OF A SPRAY MEDIUM AND METHOD FOR MANUFACTURING A CONTACT ELEMENT**

(30) Priority: 04.11.2022 DE 102022129225
(71) Applicant: TE Connectivity Germany GmbH, 64625 Bensheim (DE)
(72) Inventor: GREINER, Felix, 64625 Bensheim (DE); OBERST, Marcella Joana, 64625 Bensheim (DE); OSTENDORF, Frank, 64625 Bensheim (DE); BURESCH, Isabell, 64625 Bensheim (DE); SCHMIDT, Helge, 67346 Speyer (DE)
(74) Representative: Grünecker Patent- und Rechtsanwälte PartG mbB

(57) **Abstract**

The present invention relates to a contact element (4) comprising an electrically conductive carrier body (10) with at least one contact surface (6, 6a, 6b) for contacting at least one electrical conductor (8, 8a, 8b), wherein the at least one contact surface (6, 6a, 6b) comprises a spray coating (22) made of electrically conductive solid particles (1) distributed over the at least one contact surface (6, 6a, 6b). The presence and distribution of the solid particles (1) lead to a reduction in the contact resistance between the contact element (4) and the at least one conductor (8, 8a, 8b) when the contact element (4) is pressed with the at least one contact surface (6, 6a, 6b) against the at least one conductor (8, 8a, 8b) and the solid particles (1) have there penetrated at least in part into the material of the at least one conductor (8, 8a, 8b). The present invention furthermore relates to a connection assembly (2) with such a contact element (4). The present invention additionally relates to the use of a spray medium (60) as well as to a method for manufacturing such a contact element (4).

## Description

The present invention relates to a contact element for contacting at least one electrical conductor, such as a busbar. Furthermore, the present invention relates to an electrical connection assembly with such a contact element and at least one electrical conductor. The present invention furthermore relates to the application of a sprayed coating and a method for manufacturing such a contact element.

To transmit electrical currents between electrical modules, such as battery modules and electric motors or other electrical consumption and generation units, electrical conductors made of copper, aluminum, or their alloys are often used in automotive and energy technology. The electrical conductors e.g. in the form of busbars often have to be connected to one another or to the electrical modules in a current-conducting manner. This occurs at designated contact surfaces which are usually pressed together to establish an electrical connection. This inevitably results in contact resistance which impairs current transmission. The latter is composed of the constriction resistance and the surface contamination resistance.

The present invention is based on the object of providing devices for electrically connecting electrical conductors to one another in a current-conducting manner with the lowest possible contact resistance.

This object is achieved by a contact element comprising an electrically conductive carrier body with at least one contact surface for contacting at least one electrical conductor, where the at least one contact surface comprises a spray coating made of electrically conductive solid particles distributed over the at least one contact surface.

The features and properties of the solid particles described in the framework of this application preferably apply to all solid particles, but they apply at least to the majority of the solid particles or at least to their average.

The present invention is advantageous because it can reduce the contact resistance. This shall be explained in more detail hereafter:
On the one hand, the electrically conductive solid particles can form micro-contacts (so-called a-spots) establishing contact at discrete locations at which the current transfer takes place between the contact element and the at least one electrical conductor. Since these are discrete locations, the contact pressure there is higher as compared to continuous contact surfaces pressed together using the same normal force. Any contamination layers that may be present can be broken open and the surface contamination resistance can be reduced. In addition, the number and position of the discrete locations can be optimized by way of the parameters of the spray coating (e.g. particle density).

On the other hand, due to the distribution of the solid particles over the at least one contact surface, the micro-contacts (hereinafter also referred to as micro-surfaces or micro-surfaces establishing contact) are also distributed accordingly. This means that the current flow is not restricted at a single location and the proportion of constriction resistance that arises from the mutual influence of the individual micro-contacts can be reduced.

In summary, this means that the presence and distribution of the solid particles on the contact element according to the invention leads to a reduction in the contact resistance.

The contact element according to the invention can be part of an electrical module, in particular a connection point of the electrical module, to which the at least one electrical conductor is to be connected. Alternatively, the contact element according to the invention can be arranged between two electrical conductors to be connected to one another. In addition, only one side of the contact element according to the invention in such an embodiment can comprise the at least one contact surface with the spray coating according to the invention and the other side of the contact element can be formed with a conventional silver coating. Furthermore, the two electrical conductors to be connected to one another can alternatively share the at least one contact surface.

The invention can be further improved by the following embodiments which are advantageous by themselves and which can be combined with one another arbitrarily.

According to an exemplary embodiment, the solid particles can protrude from an oxide layer that may be present on the carrier body and at the same time contact a non-oxidized region of the carrier body and of the conductor to be contacted.

According to a further exemplary embodiment, the solid particles can be anchored in the carrier body at one end and protrude from the carrier body at another end. Due to the local high contact pressure, existing oxide layers on the conductors can be broken open. The particle diameter of the solid particles can be larger than the average layer thickness of the oxide layer on the conductor to be contacted. In order to ensure that the solid particles penetrate to the non-oxidized region of the conductor, the solid particles preferably have such a high strength that the oxide layer present on the conductor to be contacted shatters. The solid particles can penetrate and bridge the oxide layer, should an oxide layer be present. This lowers the so-called surface contamination resistance, which is part of the contact resistance, without the at least one electrical conductor having to be pre-treated or coated in order to remove the oxide layer or not allow it to form in the first place. This leads to a significant saving in effort and costs, since untreated and uncoated busbars can be used as electrical conductors.

It should presently be noted that the complexity and costs of the coating are in fact reduced and in no way just shifted from the electrical conductor to the contact element. The contact element is smaller and easier to handle than the electrical conductor, which makes it easier to coat. In addition, the contact element represents a universally employable solution that does not depend on the material or any coatings of the electrical conductor. Of course, coated and pretreated (e.g. by steel brushing and/or sandblasting) busbars can also be used as electrical conductors.

Furthermore, the particle diameter of the solid particles can be larger than, in particular more than twice, the average surface roughness of the at least one contact surface. The average surface roughness can be, for example, the mean roughness value or the roughness depth. The particle diameter of the solid particles can preferably be larger than 50 µm. In this way, the solid particles do not sink into the valleys of the surface structure of the contact region and instead protrude over the peaks of the surface structure of the contact surface.

According to a further possible embodiment of the contact element, the solid particles can be formed to be edged, in particular sharp-edged, spattered, and/or spherical. As a result, the solid particles can cling well during spray coating for the purpose of anchoring to the substrate (i.e. to the carrier body). Sharp edges are also helpful in breaking open the oxide layers that may be present on the conductor to be contacted. The solid particles can also be spherical or be provided with a combination of a spherical and edged geometry.

In order to further promote the oxide layer breaking open, the solid particles can have a greater hardness than the carrier body. The solid particles can contain, for example, at least one material from the group of nickel, silver, platinum, titanium, ruthenium, tungsten, iron, cobalt, zinc, copper, chromium and magnesium or their alloys. The carrier body can be manufactured from, for example, aluminum, copper or their alloy.

According to a further possible embodiment of the contact element, the solid particles can comprise a core and a coating. In particular, the solid particles can have what is known as a core-shell structure. Advantageously, the material of the core can differ from the material of the coating, resulting in flexibility in the selection of material. For example, the material of the core can be selected for hardness and/or conductivity, whereas the material of the coating is selected in terms of hardness. The solid particles preferably have a core made of a copper-zinc or copper-tin alloy or a copper-silver or a copper-iron or a copper-nickel or a copper-magnesium alloy with a coating of nickel, silver, or their alloy.

According to a further possible embodiment of the contact element, the solid particles can be distributed over the entire contact surface. Furthermore, the solid particles can be evenly distributed over the at least one contact surface. In the case of the evenly distributed solid particles, the average number of solid particles per unit area (i.e. particle density) is constant for different regions or at least within a +/-20% deviation, in particular within a +/-10% deviation. In this way, the available space is used as completely as possible.

However, the solid particles need not to cover the entire contact surface. According to a material and cost-saving embodiment of the contact element, it is sufficient to have the solid particles cover less than 10% of the surface of the at least one contact surface.

In order to keep the correction of the constriction resistance as large as possible, the individual solid particles can be spaced from one another. In other words, the solid particles to the degree possible form no or at least few agglomerates. Alternatively, the solid particles can of course also form agglomerates. The agglomerates can in turn be spaced from one another in order to achieve favorable current distribution.

In addition, the solid particles can be distributed aperiodically (i.e. not periodically or not forming a regular pattern) over the at least one contact surface. This embodiment has the advantage that impressions created by the solid particles on the at least one conductor do not fall onto one another when the contact element and the at least one conductor are repeatedly connected as part of repair and maintenance work. If the impressions fall onto one another, as would be expected with a periodic distribution, the current transmission would be impaired because the impressions represent worn regions. In other words, with an aperiodic distribution of the solid particles, it is more likely than with a periodic distribution that new impressions arise in places that have not yet been worn when the contact element is reconnected to the at least one conductor. Alternatively, the solid particles and agglomerates of solid particles can of course also be distributed periodically (i.e. forming a regular pattern) over the at least one contact surface.

According to a further possible embodiment, the spray coating can contain a material with an affinity for oxygen, such as chromium or magnesium. The material with an affinity for oxygen can be distributed over the entire contact surface or can be confined to an edge region of the at least one contact surface. Furthermore, the material with an affinity for oxygen can be present as a separate powder component admixed to the solid particles. The material with an affinity for oxygen can be a substance having a low electrochemical standard potential, in particular with an electrochemical standard potential that is lower than that of the solid particles, the contact element, and/or the at least one conductor. The material with an affinity for oxygen can then serve as an oxygen scavenger (so-called getter) and prevent or at least reduce the occurrence of oxidation at the micro-contacts.

The carrier body can optionally comprise two contact surfaces pointing away from one another for contacting one electrical conductor each. Both contact surfaces can comprise the spray coating. The contact element can therefore be arranged particularly easily between two electrical conductors to be connected to one another. The current then flows from one of the two conductors, via the solid particles of the first contacting contact surface, through the carrier body, via the solid particles of the second contact surface into the other of the two conductors.

In particular, the carrier body can be configured as a disk-shaped flat body with two flat sides that preferably run parallel to one another and are disposed opposite one another. The flat sides there each form a contact surface. Furthermore, the flat sides each comprise the spray coating. Due to the disk-shaped configuration, the contact element can be used, for example, as part of a retrofit for the electrically conductive connection of two already existing busbars that were previously connected directly to one another, without taking up an excessive amount of installation space.

The object set out at the outset can also be achieved by a connection assembly comprising a contact element according to one of the embodiments already described and at least one electrical conductor, where the contact element is pressed against the at least one conductor, and where the solid particles of the spray coating have penetrated or been pressed at least in part into the material of the at least one conductor. The at least one electrical conductor can be manufactured from copper, aluminum, or their alloy. The solid particles of the spray coating are present on at least one side of the contact element, preferably on the side which is pressed against the conductor to be contacted.

The connection assembly benefits from the advantages and technical effects of the contact element according to the invention already described. In particular, the solid particles of the spray coating form the micro-surfaces (i.e. a-spots) establishing contact already mentioned at the points where they have penetrated or been pressed into the material of the at least one conductor, so that the connection between the contact element and the at least one electrical conductor is characterized by low contact resistance.

The connection assembly optionally comprises an attachment device, wherein the attachment device is configured to press the contact element against the at least one electrical conductor while creating a press-fit.

The attachment device can be, for example, a screw and a nut or a threaded sleeve or a rivet, respectively. In this case, the contact element can comprise an opening, in particular a central opening, for the attachment device, wherein the opening extends through the carrier body. In the case of the disk-shaped carrier body, the opening can extend to be perpendicular to the two flat sides. For example, a washer or spacer sleeve can be used as a carrier body, wherein the washer or spacer sleeve is made of copper, aluminum, or an alloy based on one of these metals.

Alternatively, the attachment device can also be configured as a clip or clamp. The carrier body therefore does not necessarily need the opening. If necessary, the connection assembly can also comprise several attachment devices to create a particularly high combined press-fit.

According to a possible embodiment of the connection assembly, the solid particles of the spray coating can have such high strength that the oxide layer present on the at least one is shattered. In particular, the solid particles of the spray coating can have a greater elongation at break than an oxide layer present on the at least one conductor. In other words, the oxide layer is more brittle or ductile than the solid particles so that the solid particles break through the oxide layer when the contact element and the at least one electrical conductor are pressed against one another. In particular, the solid particles protrude through the oxide layer of the at least one electrical conductor and extend to a non-oxidized region of the at least one electrical conductor.

The application and/or introduction of the solid particles onto one of the conductors or the carrier material, respectively, can be achieved using various spray coating processes.

The connection assembly optionally comprises two electrical conductors. If present, the attachment device or devices can hold the contact element between the two electrical conductors.

A first use of a spray medium or of a spray containing a carrier gas and electrically conductive solid particles for creating a spray coating on an electrically conductive carrier body of a contact element likewise achieves the object set out at the outset. In particular, this use enables the simple manufacture of the contact element according to the invention with the advantages and technical effects already described.

A second use of electrically conductive solid particles applied by way of spray coating to an electrically conductive carrier body of a contact element for penetrating one or more oxide layers when contacting the contact element with at least one electrical conductor likewise achieves the object set out at the outset because the contact resistance can be reduced due to the solid particles.

A third use of a contact element with a carrier body for the electrically conductive connection of two electrical conductors likewise achieves the object set out at the outset, wherein two flat sides of the carrier body are respectively placed on one of the two conductors, wherein the contact element is pressed between the two conductors, and wherein solid particles of a spray coating on the carrier body penetrate at least in part the material of the respective conductor. In this third use, the contact element has the advantages and technical effects already described.

A method for manufacturing the contact element according to the invention likewise achieves the object set out at the outset, wherein the method comprises the steps of providing an electrically conductive carrier body with at least one contact surface and spraying electrically conductive solid particles onto the at least one contact surface. In the spraying process, the spray coating already described is applied onto the at least one contact surface. The contact element produced can thereafter be used as already described and bring about its advantages and technical effects.

According to a possible embodiment of the method, a spattered, spherical, and/or edged powder can be used as the starting material for the electrically conductive solid particles. Accordingly, when used for the first time according to the invention, the solid particles can be present in the spray medium as a spattered, spherical, and/or edged powder. Due to the spattered, spherical, and/or edged structure, such powder particles can get anchored well in the carrier body. In addition, such powder particles can easily break through oxide layers and are therefore advantageous. The powder having spherical, broken, spheroidal, or block-like particle shape can also be employed.

According to an embodiment of the contact element that is easy to manufacture, the spray coating can be a thermal spray coating, in particular a cold gas spray coating or a plasma spray coating. In the method according to the invention, the spraying process can accordingly be carried out using a cold gas spraying method or a plasma spraying method. This has the additional advantage that non-weldable or non-coatable material combinations can also be implemented in the contact element.

In order to maintain the structure, in particular the edged, sharp-edged and spattered structure of the solid particles or at least to change it as little as possible and to largely prevent oxidation of the particles, the solid particles are not melted off or on or fused during the spraying process to the degree possible. In particular, the electrically conductive solid particles can be applied primarily by acceleration in the direction of the at least one contact surface. For example, the method of cold gas spraying or plasma spraying subject to an inert/oxygen-free atmosphere can be used.

The invention shall be explained hereafter in more detail with reference to the drawings on the basis of several exemplary embodiments, the different features of which may be combined with one another as required in accordance with the above observations. In particular, individual features can be added to the described embodiments in accordance with the above explanations if the effect of these features is necessary for a specific application. Conversely, individual features can be omitted from the existing embodiments if the technical effect of these features is not important in a specific application. Similar, identical, and functionally identical elements in the drawings are provided with the same reference numerals to the extent as appropriate,
where:
- Fig. 1: shows a schematic perspective illustration of a contact element according to an exemplary embodiment;
- Fig. 2: shows a schematic illustration of a method step of the manufacturing method according to the invention in a side view;
- Fig. 3: shows a schematic exploded view of a connection assembly according to a first exemplary embodiment in a side view;
- Fig. 4: shows a schematic illustration of a connection assembly according to a second exemplary embodiment in a side view; and
- Fig. 5: shows a schematic illustration of a connection assembly according to a third exemplary embodiment in a side view.

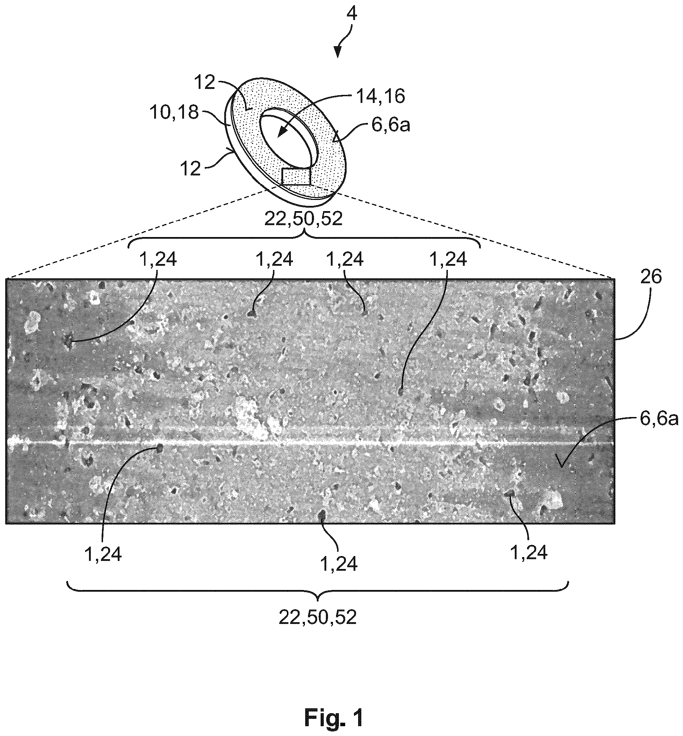

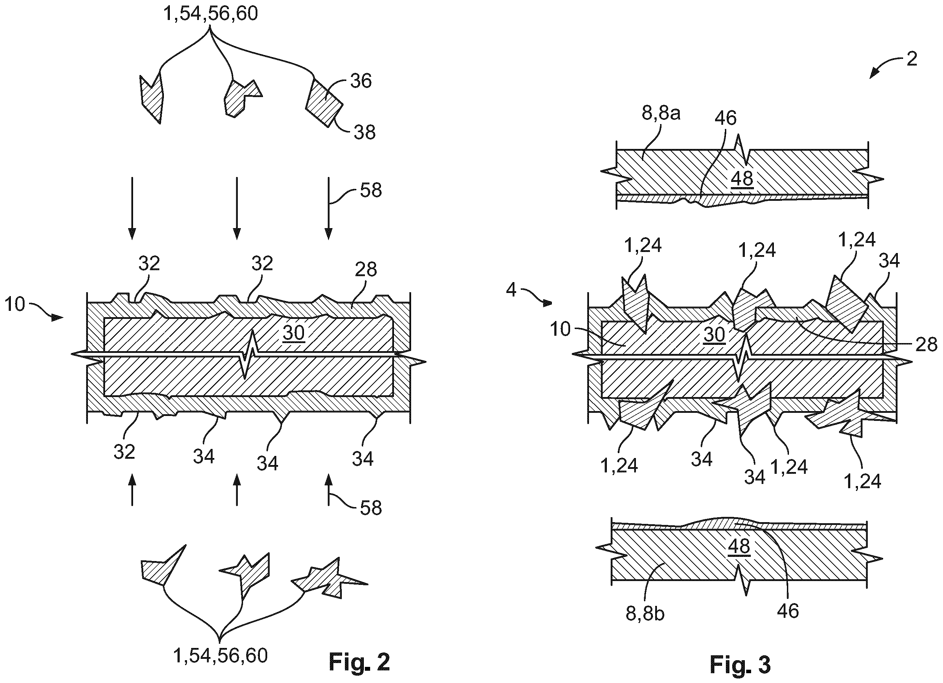

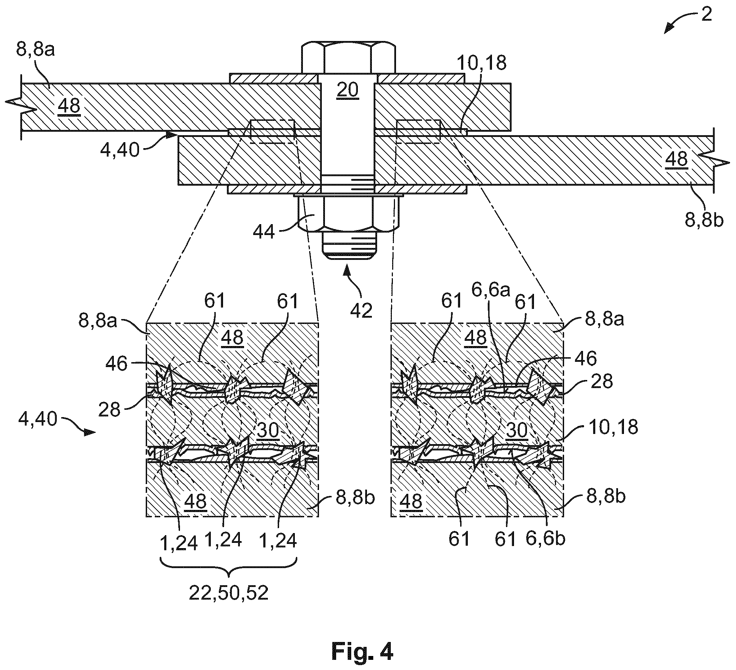

The schematic structure of a contact element 4 according to the invention shall be described hereafter with reference to the exemplary embodiment from Figure 1. Furthermore, the method according to the invention shall be described with reference to Figure 2. In addition, the schematic structure of a connection assembly 2 according to the invention shall be explained with reference to Figures 3 to 5. Finally, a first, second, and third use according to the invention shall be briefly explained with reference to Figures 2 and 4. It is to be noted there that Figures 1 to 5 are greatly simplified schematic representations which, in particular, are not to be understood to be true to scale.

It can be seen from Figure 1 that contact element 4 comprises an electrically conductive carrier body 10 with at least one contact surface 6 for contacting at least one electrical conductor 8. Carrier body 10 can optionally comprise two contact surfaces 6a, 6b pointing away from one another for contacting one electrical conductor 8 each (see Figure 4). In particular, carrier body 10 can be configured to be disk-shaped with two flat sides 12 that preferably run parallel to one another and are disposed opposite one another. The flat sides 12 there each form one of contact surfaces 6a, 6b.

Furthermore, contact element 4 can comprise an opening 14, in particular a central opening 16, wherein opening 14 extends through carrier body 10 perpendicular to the two flat sides 12. For example, a washer 18 or spacer sleeve (not shown) can be used as a carrier body 10. A screw 20 can be inserted through opening 14 (see Figure 4).

The at least one contact surface 6 comprises a spray coating 22 made of electrically conductive solid particles 1 distributed over at least one contact surface 6. in particular, both contact surfaces 6a, 6b can comprise spray coating 22.

The solid particles 1 can form micro-surfaces (so-called a-spots) establishing contact at discrete locations 24 at which the current transfer takes place between contact element 4 and the at least one electrical conductor 8. Furthermore, due to the distribution of solid particles 1 over the at least one contact surface 6, the micro-surfaces establishing contact are also distributed accordingly.

The features and properties of the solid particles 1 described in the framework of this application preferably apply to all solid particles1, but they apply at least to the majority of the solid particles 1 or at least to their average.

As can be seen from detailed view 26 of Figure 1, individual solid particles 1 are spaced from one another. In other words, the solid particles 1 to the degree possible form no or at least few agglomerates. In addition, the solid particles 1 are distributed aperiodically (i.e. not periodically or not forming a regular pattern) over the at least one contact surface 6. Alternatively, the solid particles 1 can of course also be distributed periodically (i.e. forming a regular pattern) and/or as agglomerates over the at least one contact surface 6.

The solid particles 1 can be distributed over the entire contact surface 6. However, the solid particles 1 need not necessarily cover the entire contact surface 6, but less than 10% of the surface of at least one contact surface 6. Furthermore, the solid particles 1 can be evenly distributed over at least one contact surface 6. I.e. the average number of solid particles 1 per unit area is constant for different regions or at least within a +/-20% deviation, in particular within a +/-10% deviation.

As indicated schematically in Figure 3, the solid particles 1 can protrude at one end from an oxide layer 28 present on carrier body 10 and at the same time contact a non-oxidized region 30 of carrier body 10 at another end. In other words, the particle diameter of the solid particles 1 can be larger than the average layer thickness of oxide layer 28 on carrier body 10. In particular, the solid particles 1 can penetrate up to non-oxidized region 30 of carrier body 10 and be anchored there. In order to achieve this, solid particles 1 preferably have a greater toughness, in particular a greater elongation at break, than oxide layer 28 on carrier body 10. This allows the solid particles 1 to penetrate and bridge oxide layer 28 of carrier body 10.

As can be seen from Figures 2 and 3, the particle diameter of the solid particles 1 can be larger than, in particular more than twice, the average surface roughness of at least one contact surface 6. The average surface roughness can be, for example, the mean roughness value or the roughness depth. The particle diameter of the solid particles 1 can preferably be larger than 50 µm. The solid particles 1 therefore do not sink into valleys 32 of the surface structure of contact surface 6 and at the same time protrude over tips 34 of the surface structure of contact surface 6 (see Figure 3).

As indicated schematically in Figures 2 to 4, the solid particles 1 can be configured to be edged, in particular sharp-edged. As a result, the solid particles 1 can cling well for the purpose of anchoring to the substrate (i.e. to carrier body 10) (see Figure 3).

In order to additionally promote the anchoring of the solid particles 1, the solid particles 1 can have a greater hardness than carrier body 10. The respective hardness of the solid particles 1 and carrier body 10 can be, for example, the Martens, Vickers, Shore, Brinell or Rockwell hardness or a hardness according to another hardness scale. The solid particles 1 can contain, for example, at least one material from the group of nickel, silver, platinum, ruthenium, tungsten, iron, cobalt, zinc, copper, and magnesium or their alloys, respectively. The strength, in particular the tensile and/or compressive strength, of the solid particles 1 is preferably greater than 500 N/m². Carrier body 10 can be manufactured from, for example, aluminum, copper, or their alloy.

As indicated schematically in Figure 2, the solid particles 1 can comprise a core 36 and a coating 38. In particular, the solid particles 1 can have what is known as a core-shell structure. Advantageously, the material of core 35 can there differ from the material of coating 38, resulting in flexibility in the selection of material. For example, the material of core 36 can be selected for hardness, whereas the material of coating 38 is selected in terms of conductivity. The solid particles 1 preferably have a core 36 made of a copper-zinc alloy or a copper-magnesium alloy with a coating 38 made of nickel, silver, or their alloy.

Spray coating 22 can comprise a material with an affinity for oxygen (not shown), such as chromium and/or magnesium. The material with an affinity for oxygen can be distributed over entire contact surface 6 or can be confined to an edge region of at least one contact surface 6. Furthermore, the material with an affinity for oxygen can be present as a separate powder component admixed to the solid particles 1, in core 36 of the solid particles 1, and/or in coating 38 of the solid particles 1. The material with an affinity for oxygen can be a substance having a low electrochemical standard potential, in particular having a lower electrochemical standard potential than the solid particles 1, contact element 4, and/or at least one conductor 8. The material with an affinity for oxygen can then serve as an oxygen scavenger and prevent or at least reduce the occurrence of oxidation on the micro-contacts establishing contact.

Connection assembly 2 shown in Figure 4 can comprise contact element 4 and at least one conductor 8. Contact element 4 is pressed against at least one conductor 8, wherein the solid particles 1 of spray coating 22 are penetrated or pressed at least in part into the material of at least one conductor 8. At least one electrical conductor 8 can be configured as a busbar and manufactured from copper, aluminum, or an electrically conductive alloy.

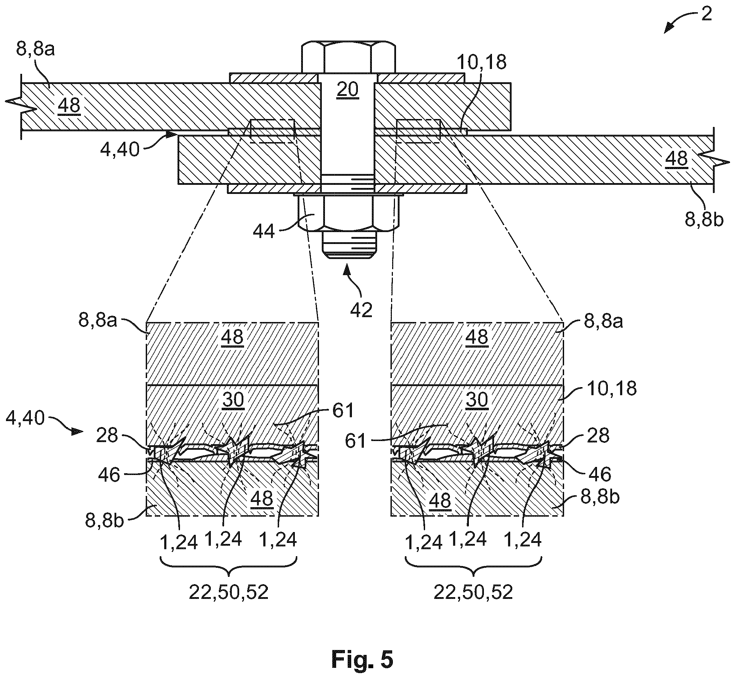

In particular, connection assembly 2 can comprise two electrical conductors 8a, 8b to be connected to one another, for example, two busbars. As can be seen from Figure 4, contact element 4 can then be arranged between the two electrical conductors 8a, 8b and function as a contact bridge 40. The current flow there (indicated by dashed lines 61 representing several current paths) takes place from one of the two conductors 8a, via the solid particles 1 of first contact surface 6a, through carrier body 10, via the solid particles 1 of second contact surface 6b into the other of the two conductors 8b or vice versa. According to an alternative embodiment, first contact surface 6a comprises the spray coating containing solid particles, whereas second contact surface 6b comprises a conventional silver coating (see enlargements in Figure 5). If necessary, contact element 4 can also be welded or soldered to second contact surface 6b on conductor 8a.

According to an alternative embodiment, not shown, the two electrical conductors to be connected to one another can share a contact surface. In other words, the two electrical conductors can rest next to one another on the same contact surface. Furthermore, the contact element can alternatively be part of an electrical module (not shown), in particular a connection point of the electrical module, to which the at least one electrical conductor is to be connected.

Connection assembly 2 can comprise an attachment device 42, where attachment device 42 is configured to press contact element 4 against at least one electrical conductor 8 while creating a press-fit. Accordingly, contact element 4 is pressed against at least one conductor 8 by attachment device 42 while creating the press-fit. Attachment device 42 can be, for example, screw 20 already mentioned and a nut 44 or a threaded sleeve (not shown) or a rivet. In the embodiment shown in Figure 4, attachment device 42 can hold contact element 4 between the two electrical conductors 8a, 8b.

According to an embodiment not shown, attachment device 42 can also be configured as a clip or clamp. Carrier body 10 then does not necessarily need opening 14. If necessary, connection assembly 2 can also comprise several attachment devices 42.

The solid particles 1 of spray coating 22 can have a greater toughness or strength, in particular a greater elongation at break, than an oxide layer 46 present on at least one conductor 8. In other words, the oxide layer is more brittle or ductile than the solid particles 1 so that the solid particles 1 break through oxide layer 46 when contact element 4 and at least one electrical conductor 8 are pressed against one another. In particular, the solid particles 1 protrude through oxide layer 46 of at least one electrical conductor 8 and extend up to a non-oxidized region 48 of at least one electrical conductor 8 (see Figure 4).

The method according to the invention is used to manufacture contact element 4 according to the invention and comprises, as a method step, the provision of electrically conductive carrier body 10 with the at least one contact surface 6. As indicated in Figure 3, a further method step of spraying at least one contact surface 6 with the electrically conductive solid particles 1 follows.

In the spraying process, spray coating 22 is applied onto at least one contact surface 6. Spray coating 22 can be a spray coating 50, in particular a thermal spray coating 52. Accordingly, the spraying process can be carried out using a thermal spraying process, for example, cold gas spraying or plasma spraying. Depending on the spraying process used, thermal spray coating can be cold gas coating or plasma spray coating.

A spattered, edged, and/or spherical powder 56 can be used as starting material 54 for the electrically conductive solid particles 1. Powder having a broken, spherical, or block-like particle shape can alternatively also be employed.

In order to maintain the structure, in particular the edged, sharp-edged, and spattered structure of the solid particles 1 or at least to change it as little as possible, the solid particles 1 are not or as little as possible melted off or on or fused during the spraying process. In particular, the solid particles 1 can be applied mainly by acceleration in the direction of at least one contact surface 6. This is indicated in Figure 2 by arrows 58. For example, the cold gas spraying method can be used.

Figure 2 shows the first use according to the invention of a spray medium 60, a spraying agent or a spray containing the electrically conductive solid particles 1 for creating spray coating 22 on electrically conductive carrier body 10 of contact element 4.

The second use according to the invention of the electrically conductive solid particles 1 applied to electrically conductive carrier body 10 of contact element 4 by way of spray coating for penetrating any oxide layers 28, 46 when contacting contact element 4 with at least one electrical conductor 8 is shown in Figure 4.

The third use according to the invention of contact element 4 with carrier body 10 for the electrically conductive connection of the two electrical conductors 8a, 8b is likewise shown in Figure 4, where two flat sides 12 of carrier body 10 are each applied to one of the two conductors 8a, 8b, where contact element 4 is pressed between the two conductors 8a, 8b, and where the solid particles 1 of spray coating 22 on carrier body 10 penetrate at least in part into the material of the respective conductors 8a, 8b.

### REFERENCE NUMERALS

- 1: solid particle
- 2: connection assembly
- 4: contact element
- 6, 6a, 6b: contact surface
- 8, 8a, 8b: conductor
- 10: carrier body
- 12: flat side
- 14: opening
- 16: central opening
- 18: washer
- 20: screw
- 22: spray coating
- 24: discrete location
- 26: detailed view
- 28: oxide layer
- 30: region
- 32: valley
- 34: tip
- 36: core
- 38: coating
- 40: contact bridge
- 42: attachment device
- 44: nut
- 46: oxide layer
- 48: region
- 50: spray coating
- 52: thermal spray coating
- 54: starting material
- 56: spattered powder
- 58: arrow
- 60: spray medium
- 61: line

## Claims

1. Contact element (4) comprising an electrically conductive carrier body (10) with at least one contact surface (6, 6a, 6b) for contacting at least one electrical conductor (8, 8a, 8b), wherein said at least one contact surface (6, 6a, 6b) comprises a spray coating (22) made of electrically conductive solid particles (1) distributed over said at least one contact surface (6, 6a, 6b).

2. Contact element (4) according to claim 1, wherein said solid particles (1) protrude from an oxide layer (28) which may be present on said carrier body (10) and at the same time contact a non-oxidized region (30) of said carrier body (10) and of said conductor to be contacted.

3. Contact element (4) according to claim 1 or 2, wherein the average particle diameter of said solid particles (1) is larger than the average surface roughness of said at least one contact surface (6, 6a, 6b) and of said possible oxide layer thickness on said carrier material/component to be connected.

4. Contact element (4) according to one of the claims 1 to 3, wherein said solid particles (1) are configured to be edged, spattered, and/or spherical.

5. Contact element (4) according to one of the claims 1 to 4, wherein said solid particles (1) have a greater hardness than said carrier body (10).

6. Contact element (4) according to one of the claims 1 to 5, wherein said solid particles (1) comprise a core (36) and a coating (38).

7. Contact element (4) according to one of the claims 1 to 6, wherein said solid particles (1) are distributed uniformly or aperiodically over said at least one contact surface (6, 6a, 6b) and/or cover less than 10% of the surface of said at least one contact surface (6, 6a, 6b).

8. Contact element (4) according to one of the claims 1 to 7, wherein said spray coating (22) contains a material with an affinity for oxygen.

9. Contact element (4) according to one of the claims 1 to 8, wherein said carrier body (10) comprises two contact surfaces (6, 6a, 6b) pointing away from one another for contacting one electrical conductor (8, 8a, 8b) each.

10. Connection assembly (2) comprising a contact element (4) according to one of the claims 1 to 9 and at least one electrical conductor (8, 8a, 8b), wherein said contact element (4) is pressed against said at least one conductor (8, 8a, 8b) and wherein said solid particles (1) of said spray coating (22) penetrate at least in part into the material of said at least one conductor (8, 8a, 8b).

11. Connection assembly (2) according to claim 10, wherein said solid particles (1) of said spray coating (22) have such a high strength that said oxide layer (46) present on said at least one conductor (8, 8a, 8b) is shattered.

12. Use of a spray medium (60) containing a carrier gas and solid particles (1) for creating a spray coating (22) on an electrically conductive carrier body (10) of a contact element (4).

13. Method for manufacturing a contact element (4), comprising the steps of:
- providing an electrically conductive carrier body (10) with at least one contact surface (6, 6a, 6b) and
- spraying electrically conductive solid particles (1) onto said at least one contact surface (6, 6a, 6b).

14. Method according to claim 13, wherein a spattered, edged, and/or spherical powder (56) is used as starting material (54) for said electrically conductive solid particles (1).

15. Method according to claim 13 or 14, wherein the spraying process is carried out using a cold gas spraying method or a plasma spraying method.

16. Method according to one of the claims 13 to 15, wherein said solid particles consist of one or more of the elements Ti, W, Ru, Cr, W, Fe, Ag, Co, Pt, Ni, Mg or a Cu alloy and are optionally coated.
